Europäisches Patentamt

European Patent Office

Office européen des brevets

(11) Veröffentlichungsnummer: **0 363 614**
**A1**

(12) **EUROPÄISCHE PATENTANMELDUNG**

(21) Anmeldenummer: 89115532.7

(22) Anmeldetag: 23.08.89

(51) Int. Cl.5: **G01S 15/02 , G01S 15/93 ,
G01S 17/06 , G01S 17/88**

(30) Priorität: 27.09.88 DE 3832720

(43) Veröffentlichungstag der Anmeldung:
18.04.90 Patentblatt 90/16

(84) Benannte Vertragsstaaten:
**DE FR GB IT SE**

(71) Anmelder: **ROBERT BOSCH GMBH**
**Postfach 10 60 50**
**D-7000 Stuttgart 10(DE)**

(72) Erfinder: **Rapps, Peter**
**Am Pfinztor 11**
**D-7500 Karlsruhe 41(DE)**
Erfinder: **Riedel, Georg**
**Ellemndinger Strasse 7C**
**D-7500 Karlsruhe 1(DE)**
Erfinder: **Noll, Martin, Dr.**
**Nelkenstrasse 5**
**D-7555 Bietigheim(DE)**

(54) Abstandsmesseinrichtung zur berührungslosen Abstands- und Winkelerkennung.

(57) Die Erfindung betrifft eine Abstandsmeßeinrichtung zur berührungslosen Abstands- und Winkelerkennung von Gegenständen, insbesondere zur Abstands- und Winkelerkennung von Hindernissen im Nahbereich von Kraftfahrzeugen. Die Einrichtung umfaßt eine Sende-/Empfangseinheit für je einen Infrarot- und einen Ultraschall-Strahl. Der Infrarot-Strahl (14) ist in Form einer schmalen Sendekeule ausgebildet und wird über den Winkelbereich eines Beobachtungsfeldes geschwenkt. Das Vorhandensein von Gegenständen sowie deren Winkelposition wird mit Hilfe der Infrarot-Einheit in kurzer Zeit festgestellt, in dem die Amplitude des reflektierten IR-Signals ausgewertet wird. Die zusätzliche Entfernungsinformation wird mit Hilfe der Ultraschalleinrichtung ermittelt. Der wirksame Ultraschall-Meßbereich überdeckt mit einer oder mit mehreren Einheiten den gesamten Schwenkwinkelbereich des Infrarot-Strahls (14). Dadurch wird bei geringem technischen Aufwand die hohe Genauigkeit der Ultraschallentfernungsmessung und die schnelle Objekterfassung durch Infrarotmessung ausgenützt.

FIG.1

## Abstandsmeßeinrichtung zur berührungslosen Abstands- und Winkelerkennung

### Stand der Technik

Die Erfindung betrifft eine Abstandsmeßeinrichtung zur berührungslosen Abstands- und Winkelerkennung von Gegenständen, insbesondere zur Abstands- und Winkelerkennung von Hindernissen im Nahbereich von Kraftfahrzeugen.

Es sind Abstandsmeßeinrichtungen zur berührungslosen Abstands- und Lageerkennung allgemein bekannt, die auf der Verwendung von Ultraschallwellen oder optischer Strahlung (z.B. Infrarotlicht) basieren. Bei der Ultraschall-Puls-Laufzeitmethode gibt ein Ultraschall-Sender für die Messung einen kurzen Ultraschall-Impuls in Richtung auf den Gegenstand, dessen Abstand vom Meßgerät aus bestimmt werden soll, ab. Am Gegenstand wird der Ultraschall-Impuls reflektiert und anschließend mit einem zugeordneten Empfänger detektiert. Die Laufzeit des Echoimpulses wird über eine Zählanordnung gemessen und daraus der zugehörige Abstand ermittelt.

Nach der gleichen Methode, bekannt als Laser-Impulsradar, kann auch auf optischem Wege eine Entfernungsmessung durchgeführt werden. Wegen der großen Lichtgeschwindigkeit und der damit verbundenen kurzen Signallaufzeiten, im Vergleich zu akustischen Messungen, ist jedoch ein viel höherer technischer Aufwand erforderlich.

In beiden Fällen (optisch und akustisch) ist prinzipiell neben der Abstands- auch eine Winkelmessung zur räumlichen Lokalisierung von Hindernissen möglich. Dies setzt jedoch voraus, daß eine schmale Sendekeule mit Hilfe einer Schwenkvorrichtung den vorgegebenen Erfassungswinkelbereich überstreicht.

Die Winkelbestimmung wird somit aus der Stellung der Schwenkvorrichtung ermittelt, bei der ein gültiges Echosignal vorliegt; der Abstand wird aus der Information gewonnen, die in dem vom Objekt reflektierten Signal, beispielsweise der Laufzeit, enthalten ist.

Das Schwenkverfahren hat jedoch den Nachteil, daß die Zeit für eine vollständige Abtastung des Beobachtungsfeldes mit wachsender Winkelauflösung stark zunimmt. Bei zeitkritischen dynamischen Vorgängen, beispielsweise für die rechtzeitige Hindernisortung im Nahbereich von Kraftfahrzeugen, ist dieses Verfahren zu langsam und damit ungeeignet.

Die Ultraschallmeßmethode ist in gewünschter Weise sehr genau, hat jedoch den Nachteil, daß sie wegen der geringen Schallgeschwindigkeit auf kleine Meßraten ( ≤20 Hz) beschränkt ist. Die Verwendung einer schwenkbaren Ultraschallsendekeule zur Winkelabtastung im Nahbereich eines sich bewegenden Kraftfahrzeugs ist daher unbefriedigend.

Mit optischen Meßmethoden lassen sich prinzipiell kürzere Meßzeiten erreichen, jedoch ist hier der technische Aufwand entsprechend hoch.

### Vorteile der Erfindung

Die Abstandsmeßeinrichtung zur berührungslosen Abstands- und Winkelerkennung mit den Merkmalen des Hauptanspruchs hat dem gegenüber den Vorteil, daß die Genauigkeit der Ultraschallmethode für die Abstandsmessung (≤1 cm) und die schnelle Objekterfassung mit Infrarotlicht zur Winkelbestimmung miteinander vereint werden. Der technische Aufwand dazu ist zudem verhältnismäßig gering. Die Entfernungsbestimmung wird mit einer der Ultraschallmeßmethode eigenen Genauigkeit von weniger als 1 cm Differenz innerhalb einer Zeit von ca. 30 ms durchgeführt. Gleichzeitig wird die Richtung eines Objekts mit dem Infrarot-Strahl ermittelt. Die Zeit hierfür ist im wesentlichen durch die maximal erreichbare Scangeschwindigkeit begrenzt und liegt in vergleichbarer Größenordnung zu der Zeit für einen Ultraschall-Meßzyklus.

Besonders vorteilhaft kann die Abstandsmeßeinrichtung zur Abstands- und Winkelerkennung von Hindernissen im Nahbereich von Kraftfahrzeugen eingesetzt werden, wobei durch zwei an diagonal gegenüberliegenden Ecken eines Fahrzeugs angebrachten Einheiten der erfindungsgemäßen Abstandsmeßeinrichtung der gesamte Bereich um ein Kraftfahrzeug abgedeckt werden kann.

### Zeichnung

Ein Ausführungsbeispiel der Erfindung ist in der Zeichnung dargestellt und wird in der nachfolgenden Beschreibung näher erläutert.

Es zeigen

Figur 1 eine Draufsicht auf ein Kraftfahrzeug mit zwei diagonal gegenüberliegend angebrachten Meßeinrichtungen und schematisch dargestellten Beobachtungsfeldern,

Figur 2 einen Ausschnitt an einer Ecke des Kraftfahrzeugs nach Figur 1 zur Erläuterung des Meßprinzips,

Figur 3 eine Darstellung der tatsächlichen Lage von Hindernissen relativ zu einem Kraftfahrzeug und eine mögliche Darstellung dieser Information für einen Fahrer auf einem Bildschirm.

### Beschreibung des Ausführungsbeispiels

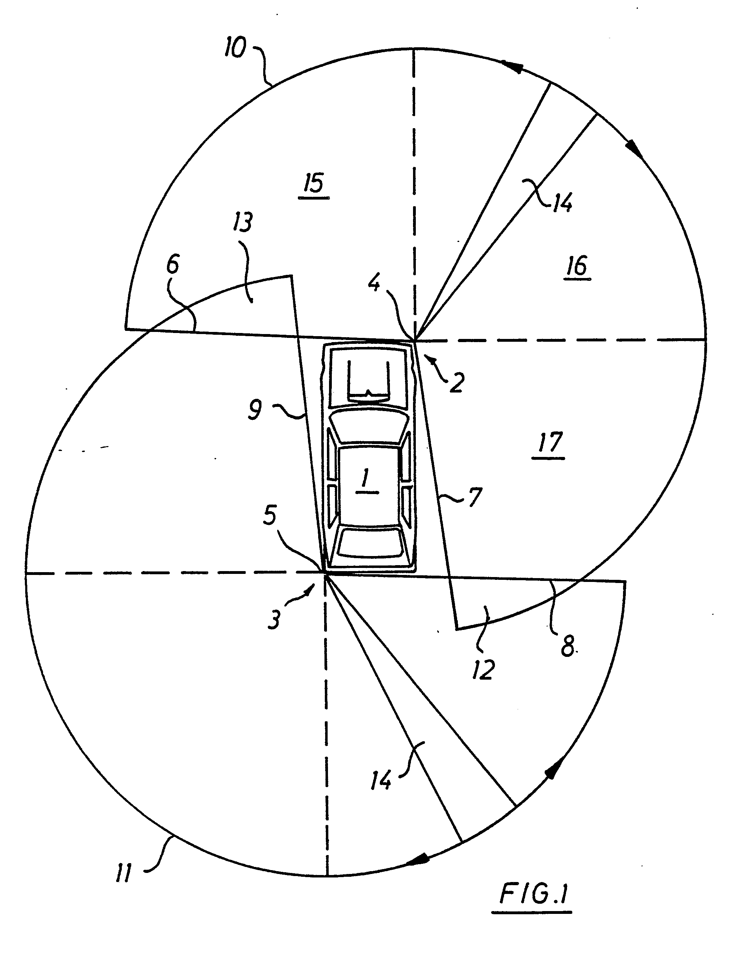

In Figur 1 ist ein Kraftfahrzeug 1 von oben her in der Draufsicht dargestellt, an dem an diagonal gegenüberliegenden Ecken 2, 3 jeweils eine Einheit der erfindungsgemäßen Einrichtung zur berührungslosen Abstands- und Winkelerkennung von Hindernissen im Nahbereich des Kraftfahrzeugs angebracht ist.

Der Meßbereich der ersten Einheit 4 an der vorderen rechten Ecke 2 des Kraftfahrzeugs 1 erstreckt sich über einen Winkelbereich von ca. 270° vor dem Fahrzeug und um die rechte Seite des Fahrzeugs herum nach hinten. Der Meßbereich der zweiten Einheit 5 an der linken hinteren Ecke 3 des Kraftfahrzeugs erstreckt sich ebenfalls über einen Winkelbereich von ca. 270° hinter dem Fahrzeug um die linke Seite des Fahrzeugs nach vorne herum.

Der Meßbereich der ersten Einheit 4 überdeckt somit einen Winkelbereich zwischen den Linien 6 und 7 und entsprechend der Meßbereich der zweiten Einheit 5 zwischen den Linien 8 und 9.

Hindernisse werden von der ersten und zweiten Einheit 4, 5 in einem Abstand erfaßt, der wenigstens dem Radius der eingezeichneten Kreisbögen 10, 11 entspricht und damit etwas größer als die Fahrzeuglänge ist. Dadurch überlappen sich die Meßbereiche an den Stellen 12 und 13, wodurch der gesamte Nahbereich eines Kraftfahrzeugs zur Erkennung von Hindernissen zweckmäßig erfaßt wird.

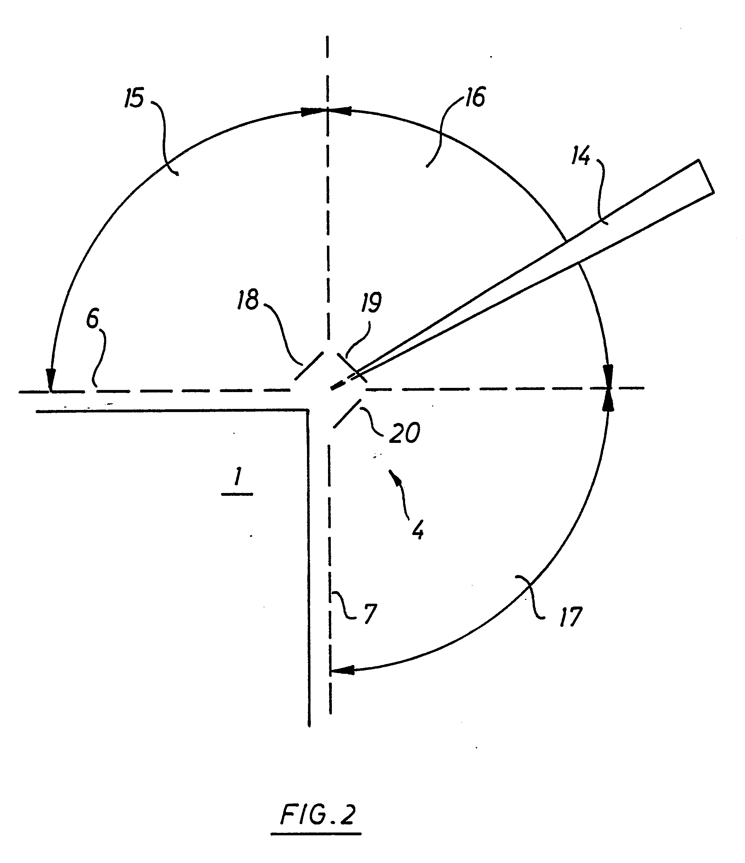

Anhand der Figur 2 wird das Meßprinzip an der Einheit 4 näher erläutert:

Eine schmale Sendekeule eines Infrarot-Strahls 14 wird über einen Winkel von ca. 270° zwischen den Linien 6 und 7 periodisch geschwenkt. Mit Hilfe dieses Infrarot-Strahls 14 wird an bestimmten, eng aufeinanderfolgenden Winkelpositionen die Richtung von nahe gelegenen Hindernissen detektiert und ein entsprechendes Lagesignal einer (nicht dargestellten) Auswerteeinheit zugeführt.

Der 270°-Schwenkwinkelbereich für den Infrarot-Strahl 14 ist in drei aneinandergrenzende 90°-Winkelbereiche 15, 16, 17 aufgeteilt; in dem weiteren 90°-Winkelbereich zur Ergänzung des Vollwinkels liegt das Kraftfahrzeug 1.

Jeder der drei 90°-Winkelbereiche 15, 16, 17 wird von einer Ultraschallmeßeinheit 18, 19, 20 erfaßt. Diese messen über die Echolaufzeit die Entfernung zu Hindernissen, die sich in einem der drei nebeneinanderliegenden 90°-Winkelbereiche 15, 16, 17 befinden und geben ein entsprechendes Abstandssignal an die (nicht dargestellte) Auswerteeinheit weiter.

Die dargestellte Anordnung hat folgende Funktion: Der schmale Infrarot-Strahl 14 wird schrittweise über den gesamten 270°-Winkelbereich bzw. über die drei 90°-Winkelbereiche 15, 16, 17 geschwenkt. Trifft er auf ein Hindernis, wird ein Teil des Infrarotsignals reflektiert und in einem fotoempfindlichen Empfänger nachgewiesen. Zur Verbesserung des Signal-Rauschabstandes wird das Sendesignal amplitudenmoduliert und der Empfänger auf die entsprechende Modulationsfrequenz abgestimmt. Dadurch wird eine weitgehende Unabhängigkeit von variablen Umgebungslichtverhältnissen erreicht. Anzahl, Richtung und Ausdehnung aller im Schwenkbereich befindlichen Hindernisse können auf diese Weise einfach ermittelt werden. Die noch fehlende Entfernungsinformation wird von den Ultraschallmeßeinheiten 18, 19, 20 geliefert.

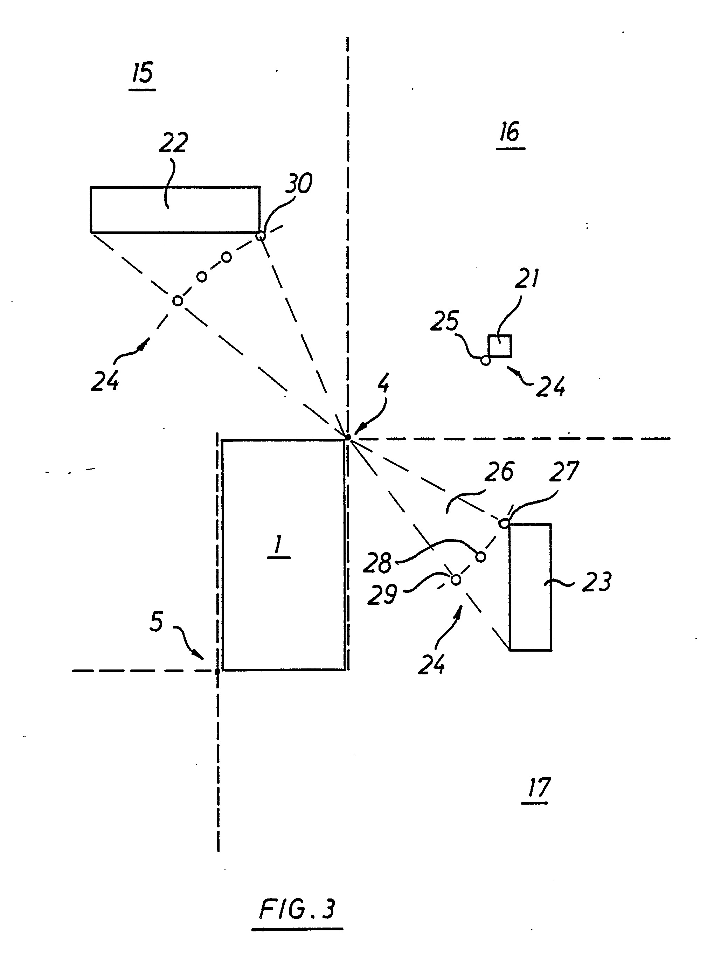

Anhand der Figur 3 wird das Ergebnis der durchgeführten Abstands- und Winkelmessung erläutert: Befindet sich nur ein Hindernis 21 mit geringer räumlicher Ausdehnung innerhalb eines der 90°-Winkelbereiche 15, 16 oder 17, so ist eine eindeutige Lokalisierung mit Hilfe des reflektierten Infrarotsignals (Winkelstellung) und des Ultraschall-Abstandssignals gegeben. Wenn es sich um größe Hindernisse 22 oder 23 handelt, wird bei genügend feiner Abtastung durch den Infrarot-Strahl die räumliche Ausdehnung solcher Hindernisse 22, 23 detektiert. Die Ultraschallmeßeinheit 18, 19, 20 ermittelt für diesen Fall den Abstand des der Meßeinheit am nächsten gelegenen Hindernisbereichs. Entsprechend ist es bei mehreren Hindernissen innerhalb eines 90°-Winkelbereichs 15, 16 oder 17 nur möglich, den kürzesten auftretenden Abstand zu bestimmen. In allen Fällen ist es zweckmäßig, allen Richtungen innerhalb eines 90°-Winkelbereichs 15, 16, 17, in denen ein Hindernis geortet wurde, diese kürzeste Entfernung zuzuordnen. Dadurch ist sichergestellt, daß der Fahrer in jedem Fall auf das nächstgelegene Hindernis aufmerksam gemacht wird.

Eine zweckmäßige Wiedergabe der Information über Hindernisse im Nahbereich des Kraftfahrzeugs 1 für den Fahrer ist in Figur 3 dargestellt. Auf einem graphikfähigen Bildschirm ist schematisch die Position des Fahrzeugs 1 und der Einheiten 4 und 5 der Abstandsmeßeinrichtung wiedergegeben. Ausgehend von der Position der Einheiten 4 und 5 werden in Polarkoordinaten Symbole 24 eingetragen, die die Lage von Hindernissen andeuten. In jedem der drei 90°-Winkelbereiche 15, 16, 17 entspricht die dargestellte Entfernung immer dem jeweiligen Mindestabstand eines Hindernisses oder Hindernisbereiches von der zugeordneten Ultraschall-Meßeinheit 18, 19, 20 (bei ausgedehnten Hindernissen muß daher eine Verzerrung in Kauf genommen werden).

Im einzelnen wird das kleine Hindernis 21 im 90°-Winkelbereich 16 durch den Punkt 25 richtig wiedergegeben.

Das im 90°-Winkelbereich 17 längs des Fahrzeugs 1 liegende Hindernis 23 wird in drei Abtastschritten vom Infrarot-Strahl 14 erfaßt und damit seine räumliche Ausdehnung im Winkelbereich 26 erkannt. Die zugeordnete Ultraschallmeßeinheit 20 ermittelt nur die kürzeste Entfernung entsprechend dem Punkt 27, der damit diesen Hindernisbereich eindeutig lokalisiert. Wie bereits beschrieben, wird auch den anderen ermittelten Winkelpositionen für das Hindernis 23 dieser Abstandswert zugeordnet, so daß die weitere Darstellung auf dem Bildschirm durch die auf einem entsprechenden Kreisbogen liegenden Punkte 28 und 29 erfolgt.

Entsprechend wird das Hindernis 22 am Punkt 30 richtig wiedergegeben. Seine Ausdehnung wird über die weiteren drei Punkte angedeutet, die auf einem Kreisbogen liegen, dessen Radius dem Abstand zu Punkt 30 entspricht.

## Ansprüche

1. Abstandsmeßeinrichtung zur berührungslosen Abstands- und Winkelerkennung von Gegenständen, insbesondere zur Abstands-und Winkelerkennung von Hindernissen im Nahbereich von Kraftfahrzeugen, mit einer Sende-/Empfangseinheit für Ultraschall-Signale, bestehend aus wenigstens einem Ultraschall-Sender zur Aussendung von zeitlich aufeinanderfolgenden Ultraschall-Signalen in ein Beobachtungsfeld mit einem bestimmten Winkelbereich, aus wenigstens einem zugeordneten Ultraschall-Empfänger zur Aufnahme von reflektierten Ultraschall-Signalen und aus einer Einrichtung zur Laufzeitmessung eines reflektierten Ultraschall-Signals vom Ultraschall-Sender bis zum Ultraschall-Empfänger mit nachgeschalteter Auswerteeinrichtung zur Umsetzung in ein Abstands-Signal, das den Abstand zwischen der Meßeinrichtung und einem im Winkelbereich nächstgelegenen Gegenstand wiedergibt, dadurch gekennzeichnet, daß eine weitere Sende-/Empfangseinheit für eine schmale Sendekeule eines Infrarot-Strahls (14) als Winkelmeßeinrichtung vorgesehen ist, wobei die Sendekeule des Infrarot-Strahls (14) periodisch im Winkelbereich (15, 16, 17) der Sende-/Empfangseinheit (18, 19, 20) für die Ultraschall-Signale geschwenkt wird, und daß bei der Reflexion des Infrarot-Strahls (14) an einem Gegenstand (21, 22, 23) dessen Winkelposition erkannt und ein entsprechendes Signal abgegeben wird und daß in der Auswerteeinheit dieses Signal mit dem Abstandssignal korreliert wird.

2. Abstandsmeßeinrichtung nach Anspruch 1, dadurch gekennzeichnet, daß die Schwenkeinrichtung für den Infrarot-Strahl eine mechanische Scan-Vorrichtung ist.

3. Abstandsmeßeinrichtung nach Anspruch 1 oder 2, dadurch gekennzeichnet, daß je eine Sende-/Empfangseinheit (4, 5) für die Ultraschall-Signale und für die schmale Sendekeule des Infrarot-Strahls (14) an zwei diagonal gegenüberliegenden Ecken (2, 3) eines Kraftfahrzeugs (1) liegen, daß der Infrarot-Strahl (14) in dem freien Winkelbereich von ca. 270° vor bzw. hinter dem Kraftfahrzeug und seitlich davon in einer horizontalen Ebene schwenkbar ist, so daß durch zwei Infrarot-Sende-/Empfangseinheiten der gesamte Bereich um das Kraftfahrzeug (1) erfaßt ist, daß jede der beiden Sende-/Empfangseinheiten für die Ultraschall-Signale aus mehreren Meßeinheiten (18, 19, 20) bestehen, die mehrere aneinandergrenzende Winkelbereiche (15, 16, 17) überdecken, wobei diese Winkelbereiche (15, 16, 17) dem 270°-Schwenkwinkelbereich des Infrarot-Strahls (14) entsprechen und damit in jedem Winkelbereich (15, 16, 17) ein Abstandssignal zu einem dort vorhandenen Gegenstand (21, 22, 23) gebildet wird, dem eine entsprechende Winkelposition zugeordnet wird.

4. Abstandmeßeinrichtung nach einem der Ansprüche 1 bis 3, dadurch gekennzeichnet, daß die Reichweiten der jeweiligen Sende-/Empfangseinheiten wenigstens etwa der Länge eines herkömmlichen Kraftfahrzeugs entsprechen.

EP 0 363 614 A1

FIG.1

FIG.2

FIG.3

**Europäisches Patentamt**

# EUROPÄISCHER RECHERCHENBERICHT

Nummer der Anmeldung

EP 89 11 5532

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | Patent Abstracts of Japan, Vol 12, Nr. 156, (P701), 13er Mei 1988 & JP-A-62 273 477 (Nippon Denso) * ganze Zusammenfassung * --- | 1,2 | G 01 S 15/02 G 01 S 15/93 G 01 S 17/06 G 01 S 17/88 |
| A | US-A-4 620 285 (T. Perdue) * Figuren, Spalte 2-8 * --- | 1,2 | |
| A | Patent Abstracts of Japan, Vol 8, Nr 19, (P-308)[1665] 19er Okt 1984 & JP-A-59 108 974 (West Denki) * ganze Zusammenfassung * --- | 1 | |
| A | GB-A-2 131 642 (Daimler Benz) * insgesamt * --- | 1-4 | |
| A | US-A-3 781 111 (Fletcher et al.) * insgesamt * ----- | 1 | |
| | | | **RECHERCHIERTE SACHGEBIETE (Int. Cl.5)** |
| | | | G 01 S |

Der vorliegende Recherchenbericht wurde für alle Patentansprüche erstellt

| Recherchenort | Abschlußdatum der Recherche | Prüfer |
|---|---|---|
| DEN HAAG | 15-01-1990 | DEVINE J.J |